# EUROPEAN PATENT APPLICATION

(11) **EP 1 724 736 A1**
(43) Date of publication of application: **22.11.2006**
(21) Application number: 03772932.4
(22) Date of filing: 26.11.2003
(51) Int. Cl.: G07F 19/00

(54) **COMPUTING SYSTEM AND MULTI-PURPOSE UNIVERSAL IDENTIFICATION CARD**

(71) Applicant: Acostada Castaneda, José Manuel, MX-03810 México D.F. (MX)
(72) Inventor: Acostada Castaneda, José Manuel, MX-03810 México D.F. (MX)
(74) Representative: Polo Flores, Luis Miguel
(86) International application number: PCT/MX2003/000102
(87) International publication number: WO 2005/052871

(57) **Abstract**

The invention relates to a computing system and to a multi-purpose universal identification card. The user of a universal card can use a single card in order to perform operations that currently require the use of various cards or personal identification means. The universal card can also be used to perform business activities such as those currently carried out with credit cards, debit cards, payroll cards or telephone cards. In addition, said card can be used to perform activities for which the user must identify him/herself with documents such as service record books, driving licences, passports or identification used to vote. The inventive universal card, which is equipped with a chip or magnetic strip, is in communication with a universal computer which performs all of the identification and authorisation functions and which communicates with different computers at the private or governmental entities responsible for said operations. Moreover, said universal cards can be used in standard card readers or to perform operations via the Internet

## Description

### BACKGROUND

Today main cards are:
Credit cards.
Debit cards.
Payroll cards.

The above cards are used to consume with previous deposits, or with repayments guarantees, like those for activating connections in Telephones, withdrawing cash from automatic teller machines, etc.

Said cards give orders to computing systems that carry out a registered control of a payment with its amount. The payment control specifies and registers to whom the payment has been made (with the above mentioned cards) and also registers the payment into the payee's account, or by a "voucher", which may be deposited into the bank account of the person receiving the payment.

There are computing systems that authorize checks to make payments.

Likewise, there are computing systems for making payment orders from the account of whoever orders it. There are also computing systems to register deposits given to secure payment, such as deposits, mortgages, etc.

There are no computing systems that perform all these functions or said orders in one system only.

Governments issue cash notes or government checks to pay bonds or government debts.

There are identifying records that indicate accomplishment of military service.

There are identifications with authorization for driving various vehicles.

There are small notebooks with identifications and features of the identified person, and registers of entrance and exit from the issuing country, notebooks that are known as passports.

There are identifications with addresses to vote in government elections.

There are Authorizations to enter into a country such as visas.

There are also systems for paying taxes and the like, through a computer.

There are not computerized systems that, using encoded cards, operate the computing systems that perform every identification and authorization function, such as the government and individual documents above disclosed, wherein said authorizations are input into an encoded card; authorizations that can be shown in that card.

According to the explained above, it is claimed a central computing system. Multiple-purpose encoded cards, cards similar in appearance to credit cards, operate computing systems interconnected to a central computing system, which performs every identification and authorization function like the government and individual or private documents above disclosed in the background of the invention. Said encoded authorizations are input into the encoded card; authorizations that can be shown in said card in its multiple uses.

### Characteristics

### Description of the System

The system is a Multiple Use Authorizing Computing System for the User of an Encoded Card; a card similar in appearance to Credit Cards:
The Computing or Data Processing System, that is claimed, allows the users of The Card to obtain authorizations for multiple uses with the use of encoded cards, similar to credit cards, in which every application, identification, authorization and use above mentioned, particularly government documents, are included, such as:
   Substitution of cash notes.
   Substitution of government checks to make payments; Buying and Selling of Bonds or government debts using an encoded card to buy or sell these bonds or securities via Internet.
   Substitution of Records with identification indicating completion of military service.
   Substitution of Identifications with authorization for driving various vehicles.
   Substitution of present identifications to have the right to vote in government elections.
   Substitution of notebook Documents with travel authorizations, such as passports.
   Substitutions of Authorizations to enter into a country, such as visas.
   Authorizations for paying taxes or any other payment to the government by means of a computer.
   Identification for the rights and scope of an insurance, etc.
   Functions of the computing system herein disclosed:
The computing system can carry out any of the following functions using an encoded card, like credit cards:
   In the same manner as bank notes represent cash, in this case the encoded card is a bank note but with a variable value. For this function the Card user must make a deposit in cash or goods in favor of and satisfying the issuer of the Card.
   The user of the computing system card, herein disclosed, can pay for goods and services obtained through a transfer of a warranty deposit, to another warranty deposit or to a bank account of the goods/service supplier. The whole operation is ordered by a credit card reader, these readers must be linked to the Central Computer of the computing system.
   The user of the computing system card, herein disclosed, may require every function performed when a monetary transfer is authorized or a collateral is given in an payment, for example by a check, a promissory note, etc. This can be made in a credit card reader similar to the one explained in the previous paragraph, or filling in a form on the Internet website, for which a check, promissory note, or something similar is received. The authorization of the corresponding monetary transfers is registered and performed by providing only the card number and its ID number, in order for the whole process to be automatically linked to the Central Computer, and providing the corresponding receipt in the card reader, via Internet or email for the accounting and fiscal purposes needed.

The user of the computing system card, herein disclosed, can carry out every function made when a card is used for withdrawing cash from automatic teller machines or for authorizing various payments in the credit card readers by performing a transfer from the corresponding warranty deposit.

The user of the computing system card, herein disclosed; by using a card similar to credit cards, can be authorized to use it as substitute for any of the following identifications or authorizing government documents:
Military Records.
Identification document to vote in official elections.
Notebooks such as Passports.
Document or equivalents to a driving license.
Encoded visa of a foreign government.
Insurance policies, etc.
A card that can operate a multiple use and authorization computing system, I have called it: Universal Card, hereinafter referred as The Card or Universal Card (both with capital letters).

A country or nation government, directly or through its licensee, is the Administrator of the computing or data processing system, the Issuer of the Encoded Card by which the computing system organizes and authorizes regulated activities, and the Authorizer of the Multiple Uses of the Card.

According to the previous paragraph, it is convenient for the respective governments to establish a governmental institution in charge of setting the conditions for issuing The Card; an Institution that must be equipped with computers or data registering terminals that the issuer will need to issue and use The Card. A Computing Network that connects said computer terminals to the controlling computer of each use of The Card can also be provided; a controlling computer I call: Universal Computer. It is suggested to criminally and administratively punish any contracting party of the system herein claimed that does not notify its current address.

The Universal Computer has an encoding device in magnetic tapes or hard drives, a non-accessible code from the Internet, to record duplicates of every hard drives file of said computer, so as to avoid any type of virus harming them. The Universal Computer must also be linked -through a network- to computers of Government Institutions related to the issue, use and operation of The Card. The Universal Computer must also be linked -through a network- to computers of other countries using The Card under agreement.

The foreign and said government Universal Computers can be linked through a network to computers containing data or reports needed by the Universal Computers.

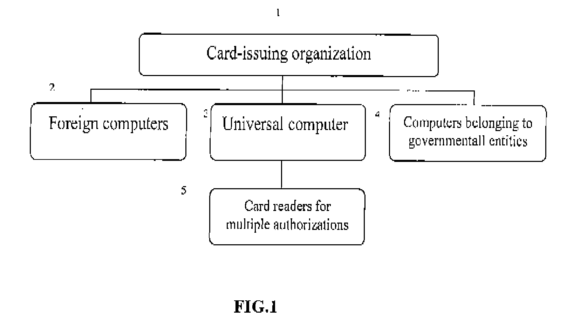

Every reader terminal of any type of card must be connected to the Universal Computer directly or indirectly through a network. The government, as issuer of The Card, must use its hegemony to fulfill this requirement. Figure 1 shows an information or main network data flowchart for the control of a computing system operated by the Universal Card.

### The Card or Universal Card User

The citizens and residents of the issuing country can become card users.

The legal entities, citizens or residents of the issuing country, will be able to require or authorize the use of The Card to other citizens or residents. The citizen or resident must fulfill the requirements established by the corresponding government institution which issues and authorizes the use of the Card.

The user must make a deposit of cash or government securities, pledges, mortgages, etc. according to requirements of the institution that issues The Card to be able to use The Card as equivalent of cash or to order transfers, guarantees or payments equivalent to checks, promissory notes, etc.

### Dimensions and Format of The Card or Universal Card

The dimensions must be identical to those of a credit card: 5.35cm wide by 8.55cm long and 1/2mm thick. The material would be the same as the credit cards.

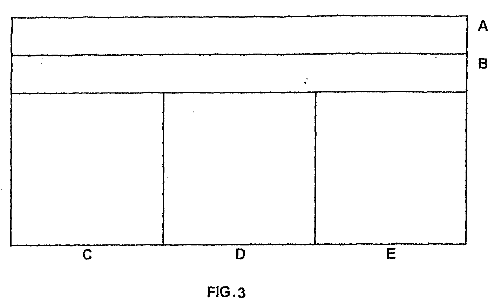

Format: Back of The Card: Figure 3, in Line A, the name of the issuing country; in Line B a magnetic tape or a chip for storing all necessary data. Therefore, both the tape and the chip must be placed in the same spot as credit cards (or similar), so that existing credit card readers can also operate on them.

In the spaces C, D and E, underneath the magnetic tape of The Card: in C: a user photograph. In D: fingerprint and in E: an integrated signature to allow ocular verification or other kinds of proof of The user of The Card.

Where it reads: "Signature", a bar code can be placed to digitalize information read by bar code readers, when necessary.

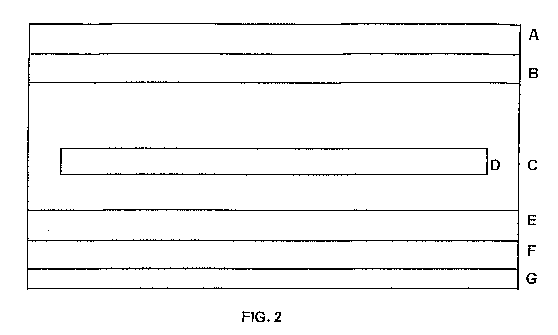

Front of The Card: Figure 2: In first Line A: the denomination: Universal Card in Kunstler Script style, in bold and 36 size or any other suitable size.

In the next line B, in the middle, the name of the issuing Country in red with Tunes New Roman font, and size 18 or any other suitable size and, a hologram of the issuing Country flag in the central part C of The Card. Said hologram will have to be engraved on The Card using anti-counterfeit technology. The number assigned to The Card is embossed on the top of the hologram of the issuing Country flag, in D, in the same place as present credit cards or the similar have the number. In the following lines E and F, are indicated the multiple uses for which The Card is authorized by the computing system operated by The Card.

In last line G, a free international telephone number for inquiries and claims is indicated.

The background colours on The Card will be assigned by the Issuer of The Card.

As an example, in Figure 2, the Universal logotype is on the front side in A, also the issuer of The Card, and some of its possible uses, in B (for example) the government of Mexico (issuer), in E: authorized use and in F: cash, passport, driving license, vote, etc.

Using a card, similar to credit cards, the user of The Card can be authorized to use it as a substitute for any of the following identifications or authorized government documents: The use of cash notes.

Military records.

Notebooks such as passports.

Documents or equivalents to a driving license.

Encoded visas from a foreign government.

Digitalized identification to vote at ballot boxes or on the Internet.

Rights for any insurance, etc.

The above identifications authorizing activities regulated by any government can be indicated on the front side of The Card, as in Figure 1, attached hereto as an example.

The computing system includes facilities for protection against viruses (anti-viruses), assault, robbery or loss.

It also includes protection against cloning.

The computing system includes emergency equipments in case of electricity fault or any problems that may occur in any units in operation.

In the event of any problem that may disable the operation of the whole computing system, a second identical system will be provided in a separate place but with the same links as the regular system. This would make the computing system thoroughly reliable.

## Claims

1. I claim -for not existing other one - a patent for a computing or data processing system that allows operating a computer exclusively dedicated to said system by the use of an encoded card similar to a credit card;
The computer dedicated to this computing system is connected by a network to every corresponding computer to issue multiple government or private authorizations to the user of the encoded card, such as:
Use of cash notes through reader terminals of credit cards or the similar as well as on Internet web sites;
Payment of taxes, goods, services, fines, rights, future obligations, etc. via Internet.
Military Records;
Notebooks such as Passports;
Documents or equivalents to driving licenses;
Identifications required to vote in government elections;
Insurance rights, etc;
The above mentioned Government Authorizations will be specified on the front side of The Encoded Card, which is called: Universal Card;
The computer exclusively dedicated to the computing system herein disclosed, will include anti-virus protection and also a hardware that will provide a digitalized register backup of every file in the dedicated computer; said hardware being non-accessible from or never connected to the Internet;
I herein designated Universal Computer to the above mentioned dedicated computer; the Systems computer performing operations or processing data to obtain authorizations of multiple uses for the user of the encoded card, such as the following:
First Use: the same purpose as cash notes, but as a note with variable value; the applicant having to give a guarantee to the issuer of the Universal Card, which may be the government or one of its licensee, by means of a repayment guarantee deposit;
Second Use: withdrawing cash from Automatic Teller Machines;
Third use: authorization of various payments with costs to a credit fund or guarantee; the authorization for payments being obtained from any existing credit card reader;
The computing system herein mentioned substituting procedures, registers and authorizing functions that are made in the following government documents:
Issue of cash notes;
Military Records;
Identifications to vote for officials of the government that issues The Card;
Notebooks such as the Passport: with an Encoded Visa from a foreign government;
Documents or equivalents to driving licenses;
Various insurance policies, etc.

2. I claim a patent for the computing or data processing system according to Claim 1, wherein the corresponding authorizations ordered are obtained through the use of a card with the printed Universal Card logotype;
The format of the whole Card having being disclosed in the "Characteristics" section; and the Kunstler Script being the type of font for the logotype at the first line on the front side of The Card.

3. I claim a patent for a computing or data processing system that enables the user of The Card to use the claims related hereto by the use of an encoded card with the dimensions and format disclosed in the "Characteristics" section.

4. I claim a patent for a computing or data processing system according to Claim 1. in which the user of the Universal Card can obtain a government authorization for: obtaining additional cards with different numbers and ID number/s so that the card user may activate one and only one of the cards with its assigned number; and using the Card ID for the first operation or inquiry with its ID, which corresponds to the number assigned to each card;
In cases of loss or robbery of the Universal Card, the user can activate one of their other inactive cards, and by doing this automatically cancels the lost or stolen Card; thus, the users themselves of The Card are the owners of the new card and do not have to go through lengthy processes.

5. I claim a patent for a computing or data processing system according to Claim I, in which the user can obtain a government authorization to obtain Cards with numbers and ID numbers that correspond to the number assigned to each card, one ID number for regular use and the other for protection against assaults; in the event of a robbery or assault in which The Card user is forced to provide the ID number to withdraw cash, the user would have to give their protection ID number, which is programmed to hand over only an insignificant amount of money and to set off an alarm in the security systems connected through a network to the Universal Computer, as protection for the users of The Card, that would indicate the exact location of the illegal transaction and start a high resolution recordation of the event and thieves and criminals involved.

6. I claim a patent for a computing or data processing system that allows the use of an encoded card similar to a credit card, herein denominated 07, in which the user is protected from cloning:
In order to do so, the user may access to an Internet web site from any given PC with access to the Internet and type in the address "Universal-Card-Code-Change" (adding any corresponding terms), this web site being operated from the so-called Universal Computer; in said site, it will appear a window with three boxes to be filled in, one requesting issuing country, another requesting card number and the other requesting the current code; after filling in these boxes, the page is automatically linked to another page demanding a new code; once typing this new code in, it is input into the magnetic tape or chip, erasing the previous one: if anyone tries to use a card with the same number but with the previous code, apart from rejecting The Card, the se-dad systems connected to the Universal Computer would be activated to immediately locate the illegal use of The Card, and starting a recordation of high resolution of the event and thieves and criminals involved:
For the computing system to operate and authorize, through the use of an encoded card similar to credit cards so that it may become a substitute for cash.

7. I claim a patent for a computing or data processing system that using an encoded card similar to a credit card according to Claim 1, allows the user performing commercial operations similar to those performed with cash, either bills or coins, the user being also able to obtain cash from any credit card reader terminal, the user of The Card having to guarantee the payment to the issuer, which can be the government or one of its licensees, by a deposit that satisfies the issuer of The Card, in an account assigned by the owner of the reader terminal corresponding to The Card.

8. 1 claim a patent for a computing or data processing system according to the claims that using an encoded card similar to credit cards, allows the user of Universal Card obtaining reports of the interest rate paid for deposits or guarantees in national or foreign currency, generally the same currency deposited by the Issuer of The Card, from any PC with access to the Internet; for this purpose, the Issuer of the Universal Card creates a site called: "Universal-Card-Interest-Inquiries'' (adding any corresponding terms) on Internet; there are three boxes in this site: one to be filled in with the name of the Issuer, another with the number of The Card and the other one with The Card ID number, this site allows obtaining all detailed information required.

9. I claim a patent for a computing or data processing system that using an encoded card similar to credit cards herein called Universal Card, allows the user obtaining reports of every operation performed in the reader terminals that supply cash traditionally or automatically via email, as well as reports of the accumulated interest and outstanding balances instantaneously obtained from bonds deposited; said bonds being in guarantee for the use and operation of the Universal Card.

10. I claim a patent for a computing or data processing system that using an encoded card similar to credit cards allows the user performing authorizations for automatically paying consumption taxes originated for the use of the herein called Universal Card.

11. I claim a patent for a Computing or data processing system that using an encoded card similar to credit cards, allows automatically paying any good or service required by the user of the herein called Universal Card by transferring the corresponding amount into a supplier's guarantee account, who is also user of the Universal Card; or into a supplier's bank account, depending on the set up of the supplier's credit cards reader); payments in foreign exchange from a foreign supplier being charged to the user of The Card in The Card Issuer's currency on the effective date of payment.

12. I claim a patent for a computing or data processing system that using an encoded card similar to credit cards, allows the user of The Card receiving an alert in advance of the lack of sufficient guarantee funds via email or in the consumption terminal, so as not to incur into overdrafts like, for example, check payments without sufficient funds, and thus avoiding sanctions, in which case The Card would simply not be authorized for use as cash.

13. I claim a patent for a computing or data processing system that using an encoded card similar to credit cards herein called Universal Card, allows the user filling in forms on the Internet to authorize transactions, or any payment, immediate payment or bond payment of any debt according to the conditions set in said form; and
the computing system operating or issuing government authorizations by using an encoded card similar to a credit card, which is herein called Universal Card.

14. I claim a patent for a Computing or data processing system disclosed in the Claim that using an encoded card similar to credit cards herein called Universal Card, allows the user obtaining an authorization or identifying government document similar to a Military Notebook; said authorization, further to be encoded on the magnetic tape, being printed in the part that indicates the multiple uses of The Card according to Figures 2 and 3 explained in the "Characteristics of the Computing System for Multiple Uses" section: the data will have to be input in the application form of The Card in the corresponding terminals or in the form on the Internet.

15. I claim a patent for a computing or data processing system that using an encoded card similar to credit cards herein called Universal Card, allows the user obtaining an authorization or government document similar to a Passport; an authorization that will be encoded and shown on The Card, according to the annexed Figure explained in the "Characteristics of The Card" section; the data will have to be input in the application form of The Card in the corresponding terminals or in the form on the Internet.

16. I claim a patent for a computing or data processing system that using an encoded card similar to credit cards herein called Universal Card, allows the user obtaining a government authorization similar to a driving license; an authorization that will be encoded and printed on The Card; said authorization being encoded and printed on The Card; the data will have to be input in the application form of The Card in the corresponding terminals or in the form on the Internet.

17. I claim a patent for a computing or data processing system that using an encoded card similar to credit cards herein called Universal Card, allows the user obtaining a government authorization similar to the identification needed to vote in elections, either in boxes or via Internet; the data will have to be input in the application form of The Card in the corresponding terminals or in the form on the Internet.

18. I claim a patent for a computing or data processing system that using an encoded card similar to credit cards herein called Universal Card, allows the user obtaining a foreign governments' authorization similar to a foreign visa; a convention with the country that issues the Visa being necessary; and said authorization being encoded on The Card.

19. 1 claim a patent for a computing or data processing system that using an encoded card similar to credit cards herein called Universal Card, allows the user obtaining government authorization for the payment of: fines, numerous rights, acquisition of goods and services provided by the government, by filling in a form on the Internet, in which the corresponding government authorizes the usage of The Card for this purpose.

20. I claim a patent for a computing system of multiple uses herein disclosed that includes identical systems in a remote place that operate in suddenly unexpected events, and are linked through a network to the regular operating systems.
